(19) Europäisches Patentamt

European Patent Office

Office européen des brevets

(11) **EP 0 834 228 B1**

(12) **EUROPÄISCHE PATENTSCHRIFT**

(45) Veröffentlichungstag und Bekanntmachung des Hinweises auf die Patenterteilung:
**02.11.2000  Patentblatt 2000/44**

(21) Anmeldenummer: **96914093.8**

(22) Anmeldetag: **22.05.1996**

(51) Int Cl.⁷: $H04L\ 27/02$

(86) Internationale Anmeldenummer:
**PCT/DE96/00888**

(87) Internationale Veröffentlichungsnummer:
**WO 97/01234 (09.01.1997 Gazette 1997/03)**

(54) **FREQUENZ- UND PHASENREGELKREIS FÜR VSB-EMPFÄNGER**

FREQUENCY- AND PHASE-REGULATOR CIRCUIT FOR VSB RECEIVERS

CIRCUIT DE REGULATION DE FREQUENCE ET DE PHASE POUR RECEPTEURS BLA

(84) Benannte Vertragsstaaten:
**CH DE ES IT LI**

(30) Priorität: **20.06.1995  DE 19522231**

(43) Veröffentlichungstag der Anmeldung:
**08.04.1998  Patentblatt 1998/15**

(73) Patentinhaber: **ROBERT BOSCH GMBH**
**70442 Stuttgart (DE)**

(72) Erfinder:
• **GÖCKLER, Heinz**
  **D-71522 Backnang (DE)**
• **ALBERTY, Thomas**
  **D-71522 Backnang (DE)**

(56) Entgegenhaltungen:
**EP-A- 0 250 926      EP-A- 0 651 526**
**WO-A-94/18772**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 834 228 B1

## Beschreibung

Die Erfindung betrifft einen Frequenz- und Phasenregelkreis, für ein digitales komplexwertiges Restseitenbandsignal oder nyquistflankengefiltertes Signal, beispielsweise ein digitalisiertes TV-Signal, mit einer AFC/PLL-Regelschleife zur digitalen Frequenz- und Phasenregelung.

Stand der Technik

Um eine frequenz- und phasenstarre Regelung zu erreichen, ist es aus IEEE Transactions on Communications, Vol. 37, No. 2, 1989, Seiten 159 bis 163 bekannt, neben der schmalbandigen PLL-Schleife eine zusätzliche AFC-Schleife vorzusehen. Für die Verarbeitung digitaler Signale eignet sich als Frequenzfehlerdetektor ein Quadricorrelator.
Aus der EP 583 643 A1 ist eine gemeinsame Frequenz- und Phasenregeleinrichtung bekannt, bei der vor dem Schleifenfilter der AFC-Schleife dezimiert wird und danach interpoliert wird. Als Frequenzfehlerdetektor dient dort auch ein Quadricorrelator. Aus dieser Veröffentlichung ist es nicht bekannt, ein digitales kompexwertiges Restseitenband-Signal oder ein nyquistflankengefiltertes Signal zu verarbeiten.

Vorteile der Erfindung

Der Frequenz- und Phasenregelkreis nach den Merkmalen des Anspruchs 1 liefert eine frequenz- und phasenkorrekte Synchronisierung, für ein digitales komplexwertiges Restseitenbandsignal oder auch ein nyquistflankengefiltertes Signal.
Das übliche TV-Signal - FBAS$_{TT}$ - Signal in modulierter Form ist ein ZSB (Zweiseitenbandsignal mit Träger), wobei das untere Seitenband ab f$_{BT}$ (Bildträger) -0,5MHz mittels eines Bandpaßfilters abgeschnitten/weggefiltert wurde (amputiertes ZSB-Signal: AZSB). Zur Demodulation eines solchen Signals muß frequenzrichtig und phasenstarr abgemischt werden, um das modulierte Signal korrekt zurückzugewinnen.
Der Regelkreis nach der Erfindung stellt eine Frequenznachführung in einem ausreichenden Fangbereich sicher. AFC und PLL-Jitter können wirksam unterdrückt werden.

Zeichnungen

Anhand der Zeichnungen werden Ausführungsbeispiele der Erfindung näher erläutert. Es zeigen

Figur 1 das Blockschaltbild eines TV-Demodulators mit dem erfindungsgemäßen Regelkreis,
Figur 2 ein Blockschaltbild für eine Ausgestaltung des erfindungsgemäßen Regelkreises,
Figur 3 die Struktur eines Tiefpaßfilters zur Erzeugung eines symmetrischen Zweiseitenbandsignals,
Figur 4 den Aufbau des Frequenzfehlerdetektors,
Figuren 5 und 6 die Spektralanteile des Frequenzfehlerdetektors,
Figur 7 eine vereinfachte Form des Frequenzfehlerdetektors,
Figur 8 einen Quadricorrelator als Frequenzfehlerdetektor,
Figur 9 den Betrag der Übertragungsfunktion H$_{PED}$,
Figur 10 ein Blockschaltbild für den Frequenzeinrastindikator,
Figur 11 die Übertragungsfunktion des Vorfilters sowie das Spektrum des RSB-Signals,
Figur 12 den normierten Frequenzgang des Vorfilters für die Verarbeitung eines RSB-Signals,
Figur 13 die Struktur des Vorfilters gemäß Figur 12,
Figur 14 das vereinfachte Modell der Frequenzregelschleife im Zeitbereich,
Figur 15 das vereinfachte Modell der Phasenregelschleife ebenfalls im Zeitbereich,
Figur 16 die Struktur des PLL-Tiefpasses,
Figur 17 die Struktur des PLL-Tiefpasses in faktorisierter Form,
Figur 18 die Struktur des PLL-Tiefpasses mit Dezimation,
Figur 19 ein Teilfilter der PLL in rekursiver Realisierung.

Beschreibung der Erfindung

Die Erfindung wird für die Frequenz- und Phasenregelung eines digitalisierten komplexen TV-Signals erläutert.

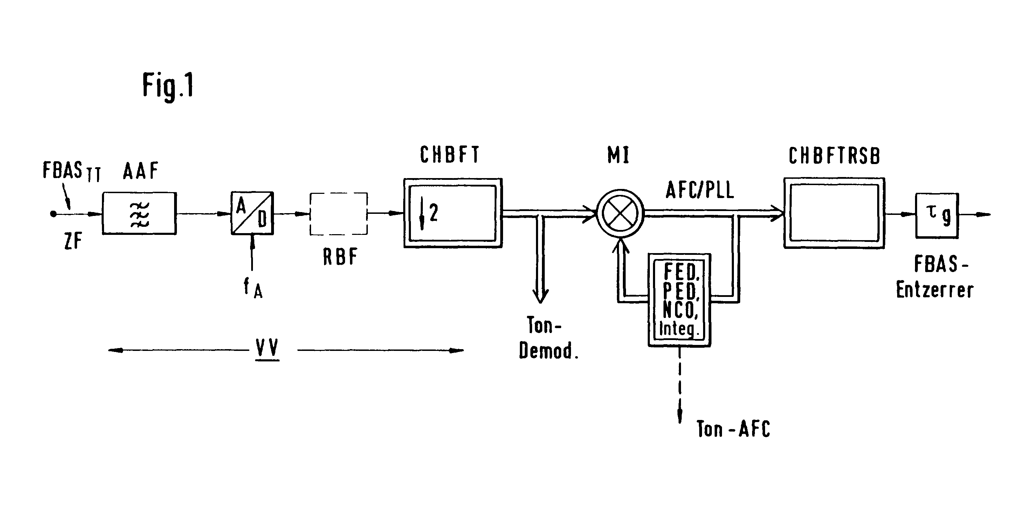

Figur 1 zeigt ein Blockschaltbild eines TV-Demodulators (ohne Tonteil) mit phasenstarrer Frequenzregelung AFC/PLL. Das eingangsseitige FBAS$_{TT}$-Signal in ZF-Lage wird einer Vorverarbeitungsstufe VV zugeführt, dort vorgefiltert - Anti-Alialising-Filter AAF - ,abgetastet (A/D), mit der Abtastfrequenz f$_A$ von beispielsweise 28,2763 MHz, gegebenenfalls über ein Bandfilter RBF mit reellen Koeffizienten geleitet und einem komplexen Filter (Restseitenbandfilter) CHBFT zugeführt. Das komplexe Filter ist vorzugsweise als L-Bandfilter ausgeführt mit einem Dezimationsfaktor von beispielsweise L=2 (Halbbandfilter). Nähere Einzelheiten dieser Vorbearbeitung finden sich in den Veröffentlichungen EP-A 0 651 526 und EP-A 0 683 608 bzw. der DE-PS 36 21 737. Das so vorverarbeitete komplexwertige TV-Signal wird zur Demodulation über ein komplexes Nyquistfilter geführt, wobei der Symmetriepunkt genau bei der Trägerfrequenz liegen muß ($f_{Nyq} = f_{BT}$). Mittels einem Mischer MI wird eine Frequenzverschiebung um $-f_{BT}$(Bildträgerfrequenz) nach $f = 0$ vorgenommen. Bei dem in Figur 1 dargestellten Konzept wird diese Reihenfolge vertauscht, da nur die komplexwertige Einhüllende betrachtet wird (äquivalente Basisbanddarstellung); d.h. es erfolgt zuerst eine Abmischung um $-f_{BT}$ nach $f = 0$ und anschließend ein komplexe Nyquistfilterung - CHBFTRSB - mit $f_{nyq} = 0$, was aufwandsgünstiger zu realisieren ist (letzter Demodulatorschritt: Realteilbildung).

In dem interessierenden Bereich wird das AZSB-Signal über ein Filter mit dem Betragsfrequenzgang:

$$\left| H(e^{j\Omega}) \right| = 1 - \Delta H(e^{j\Omega}) \quad \Omega > 0,$$

$$\Delta H(e^{j\Omega}) \quad \Omega < 0$$

geführt.

Das AZSB-Signal entspricht nach der Nyquistfilterung einem ESB-Signal mit Abweichungen davon um die Trägerfrequenz mit Trägerzusatz. Es gilt

$$\underline{s}_{RSB}(k) = a_0 \left[ 1 + m \left( v(k) \pm jv(k) \right) \right]$$

$$\cdot e^{j(2\pi k f_0 T + \varphi_0)}$$

Damit ist ersichtlich, daß frequenzrichtig ($-f_0$) und phasenstarr ($-\varphi_0$) abgemischt werden muß, um durch Realteilbildung der komplexen Einhüllenden das modulierende Signal

$$a_0 (1+mv(k)) = R_e\{\underline{s}_{RSB}(k)\}$$

korrekt zurückzugewinnen.

Der erfindungsgemäße Regelkreis (beispielsweise als Teil eines TV-Demodulators) muß folgende Forderungen erfüllen:

a) frequenz- und phasenkorrekte Synchronisierung (AFC-PLL)
b) AFC-Nachziehbereich: $\pm 140$ KHz.

Die Anfangssynchronisation, bzw. die Einregelung beim Auftreten von Frequenz- oder Phasensprüngen sollte etwa eine Sekunde nicht überschreiten.

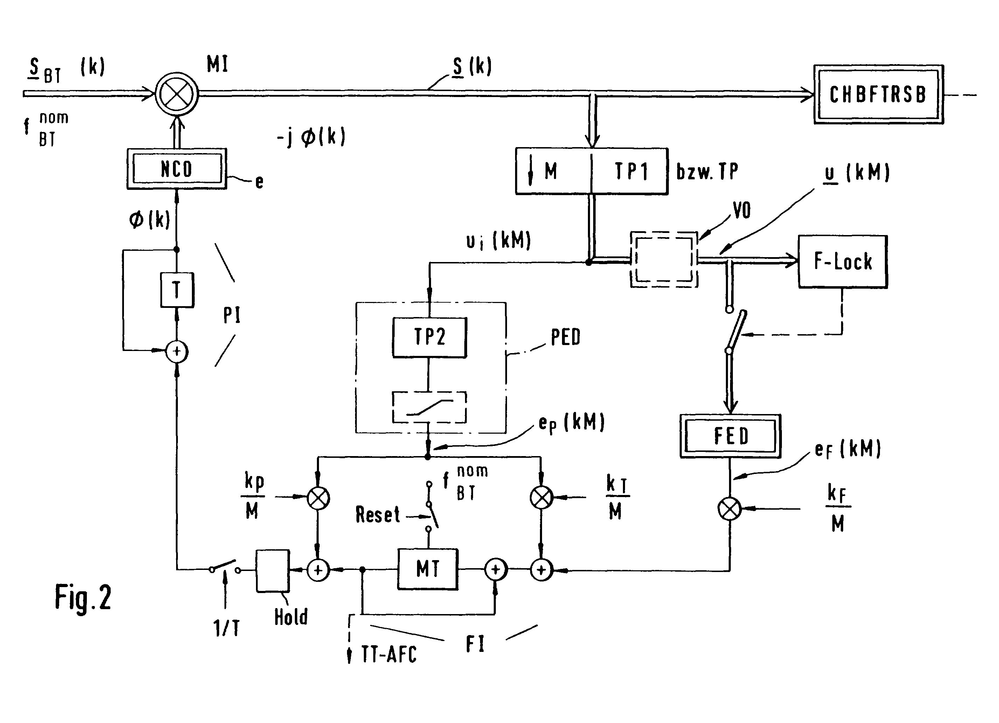

Der erfindungsgemäße Regelkreis nach Figur 2 wird vorerst für den Fall beschrieben, daß das geträgerte Bildsignal $\underline{s}_{BT}(k)$ ein AZSB-Signal ist. Hierfür entfällt der Block VO. Zu Beginn wird durch Reset die AFC auf die nominelle Bildträgerfrequenz $f_{BT}^{nom} = 3{,}5145$ MHz gesetzt, um die herum die tatsächliche Bildträgerfrequenz $f_{BT}$ um bis zu $\pm 140$kHz abweichen kann.

Damit liegt die abgemischte Bildträgerfrequenz von $\underline{s}(kT) = \underline{s}(k)$ mit

$$T = 1/f_A = \frac{1}{14{,}13818 \text{ MHz}}.$$

bei $f = 0 \pm 140$kHz, also in der Nähe des Wunschwertes $f = 0$. Im Bereich $f_{BT} \pm 500$ KHz ($\pm 500$ kHz bei $\underline{s}(k)$) ist das Spektrum $|\underline{s}|$ bezüglich $f_{BT}$ hermitesch (Betrag ist gerade, Phase ungerade Funktion der Frequenz), da dieser Anteil identisch ist mit dem ursprünglichen nicht amputierten FBAS-ZSB-Signal.

Um aus dem AZSB-Signal für die Regelung der Frequenz und Phase ein ZSB-Signal zu machen, wird das Steuersignal durch einen Tiefpaß TP (Mittelung) bandbegrenzt.

Um den Jitter des NCO-Signals $e^{-j\phi(k)}$ kleinzuhalten, ist eine kleine Schleifenbandbreite $B_L$ zu wählen. Eine PLL (Zweig PED) zweiter Ordnung konvergiert auch bei beliebigen Frequenzablagen. Bei kleinen Werten von $B_L$ kann dies unter Umständen Minuten/Stunden dauern. Da in Figur 2 in der Schleife aus genannten Gründen ein Tiefpaß TP vorgesehen ist, liegt aber tatsächlich eine Schleife höherer Ordnung vor, für die eine Anfangssynchronisation nicht garantiert werden kann. Aus letztgenanntem Grund stellt daher auch die Erhöhung der Schleifenbandbreite $B_L$ während der Einlaufphase (Parameterumschaltung von $k_I$ und $k_D$) keine Lösung dar, die eine Konvergenz garantiert, da etwa ab $B_L > / \approx f_A/100$ sich die Schleifenverzögerung durch die Tiefpaß TP zunehmend störend auswirkt. Um das Einlaufen zu garantieren und in einer akzeptablen Zeit sicherzustellen, wird daher eine zusätzliche Frequenzregelschleife (FED) vorgesehen, die für die mögliche Frequenzablage von ± 140 kHz die Frequenznachführung sicherstellt.

Ein Tiefpaßfilter TP im Regelkreis ist geeignet, aus dem AZSB-Signal ein bandbegrenztes, zu einer Bezugsfrequenz symmetrisches ZSB-Signal zu erzeugen. Dieser Tiefpaß soll auch bei maximaler Frequenzablage (± 140 kHz) den Bildträger BT nur geringfügig dämpfen. Das Tiefpaßfilter TP soll bezüglich der Sollfrequenzlage (Bezugsfrequenz f = 0) symmetrisch sein, d.h. reelle Koeffizienten aufweisen. Das Tiefpaßfilter TP ist vorzugsweise dezimierend ausgebildet, was sowohl den Verknüpfungsaufwand dieses Tiefpaßfilters als auch der Rechenaufwand der nachfolgenden Einheiten der Schleife vermindert. Der Dezimationsfaktor ist so zu wählen, daß vorzugsweise folgende Bedingungen gelten: $-f_A/M$ > Nachziehbereich (140 kHz) mit M = Anzahl der Abtastwerte,

- Schleifenbandbreite $B_L < / \approx \frac{(f_A/M)}{100}$), damit sich die 100 Schleifenverzögerung durch den Tiefpaßfilter nicht schädlich auswirkt,

- Schleifenbandbreite $B_L \approx \omega_L$ = Fangbereich (lock-in) einer PLL. Mit der Wahl von M = 32 gilt:

$$f_A/M = 441{,}81 \text{ kHz} > 140 \text{ kHz und } B_L \approx \omega_n \leq 4 \text{ kHz}.$$

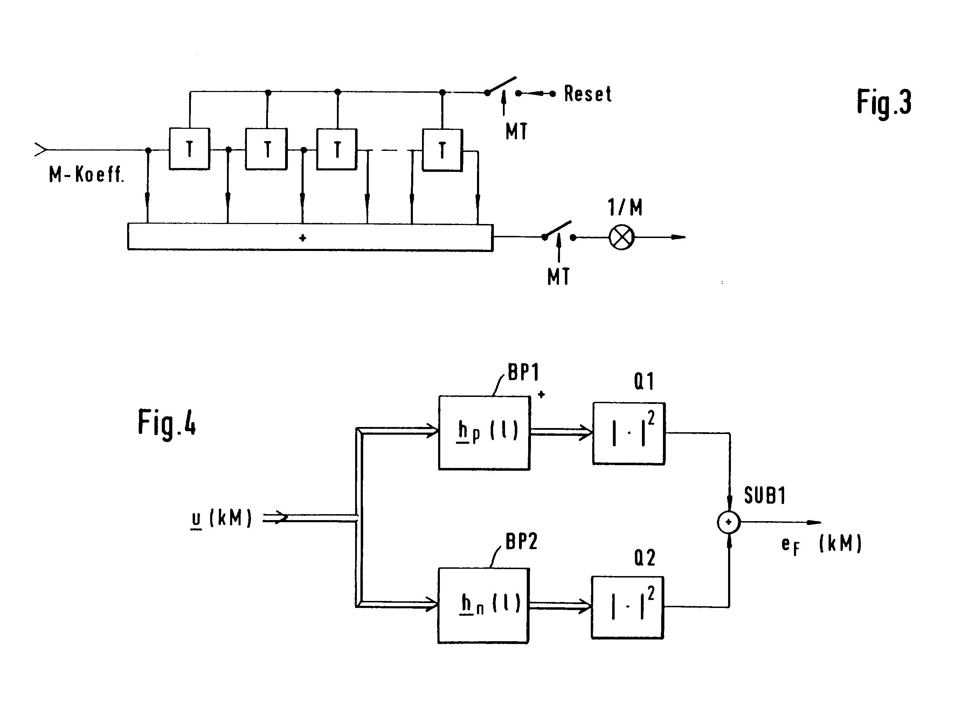

Damit kann das Tiefpaßfilter TP sehr einfach durch die Summation von M aufeinanderfolgenden Abtastwerten (mit Skalierung 1/M) mit Abtaktung und Reset alle M Abtastwerte realisiert werden (Figur 3). Für die Übertragungsfunktion des Tiepaßfilters nach Figur 3 gilt:

$$\left| H_{TP}(e^{j\Omega}) \right| = \frac{1}{M} \frac{\sin M \, \pi f/f_A}{\sin \pi f/f_A}$$

Das Tiefpaßfilter TP weist Nullstellen (Dämpfungspole) bei $m \cdot f_A/M$, m = 1, 2,...,M-1 auf.

Da das Tiefpaßfilter TP noch relativ hohe Aliasingbeiträge erzeugt, besteht eine Ausgestaltung der Erfindung darin, die Frequenzregelung nur während der Austastlücken (Schwarzschulter) zuzulassen, um gänzlich unabhängig von der jeweiligen FBAS-Modulation zu sein.

Für den Wirkbereich (Bandbreite) der AFC (± 140 kHz) wird das Tiefpaßfilter TP als transparent betrachtet: Dämpfung $a_s$ (±140 kHz) ≈ 1,5dB.

Der Frequenzeinrastindikator F-Lock ist zunächst als optional angenommen. Falls die AFC Anlaß zu Jitter gibt oder eine Restfrequenzablage bewirkt, ist die AFC-Regelschleife durch das Lock-in-Signal abzuschalten.

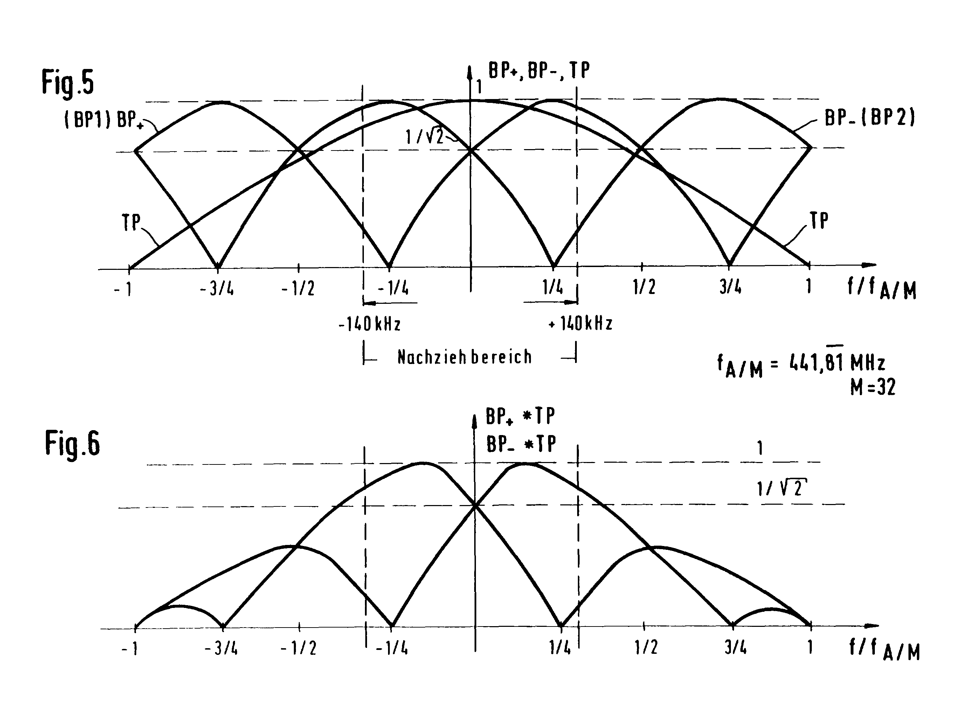

Die Wirkungsweise und der Aufbau des Frequenzfehlerdetektors (FED) ist in den Figuren 4 bis 6 dargestellt. Das tiefpaßgefilterte, dezimierte komplexwertige Signal $\underline{u}(kM) = u_r(kM) + ju_i(kM)$ wird auf zwei Bandpaßfilter BP1 und BP2 mit komplexen Koeffizienten geleitet, die beide vom selben Prototypfilter durch Frequenzverschiebung um ± 1/4 $\cdot f_A/M = \pm 1/4 \cdot f_A'$ abgeleitet sind (Figur 4). Die Differenz - SUB1 - ihrer Ausgangsleistungen - Quadrierer Q1, Q2 - liefert die Fehler- bzw. Regelgröße $e_F(kM)$. Die beiden Frequenzgänge sind in Figur 5 für das Prototypfilter H(z) = 1 + $z^{-1}$ dargestellt. Je nachdem, wo der Träger im Nachziehbereich liegt, dominierender Leistungsanteil in dem tiefpaßgefilterten AZSB-Signal, ist $e_F(kM) \gtrless 0$ und zieht somit die Frequenz nach. Zu beachten ist, daß für die Spektralanteile von $\underline{s}(k)$ vor der Tiefpaßfilterung die Kaskade der Frequenzgänge von TP und BP1 bzw. BP2 wirksam ist (Figur 6). Dagegen sind für die Spektralanteile, die überfaltet werden bzw. die sich mit der Grundperiode $f_A' = f_A/M$ periodisch wiederholen, nur die Übertragungsfunktionen von BP1 bzw. BP2 alleine wirksam (Figur 5). Somit tritt z.B. bei $f_A'/4$ und gleichzeitig bei $-3f_A'/4$ eine Linie auf, was das Reglerausgangssignal des Frequenzfehlerdetektors FED verdoppelt. Mit den Beziehungen

$$\underline{h}_P(l) = \underline{h}_P(kM) = h_r(l) + jh_i(l)$$

$$\underline{h}_n(l) = \underline{h}_n(kM) = h_r(l) - jh_i(l)$$

gilt für das Ausgangssignal:

$$e_F(l) = 4(h_r * u_i) \cdot (h_i * u_r) - 4(h_r * u_r) \cdot (h_i * u_i)$$

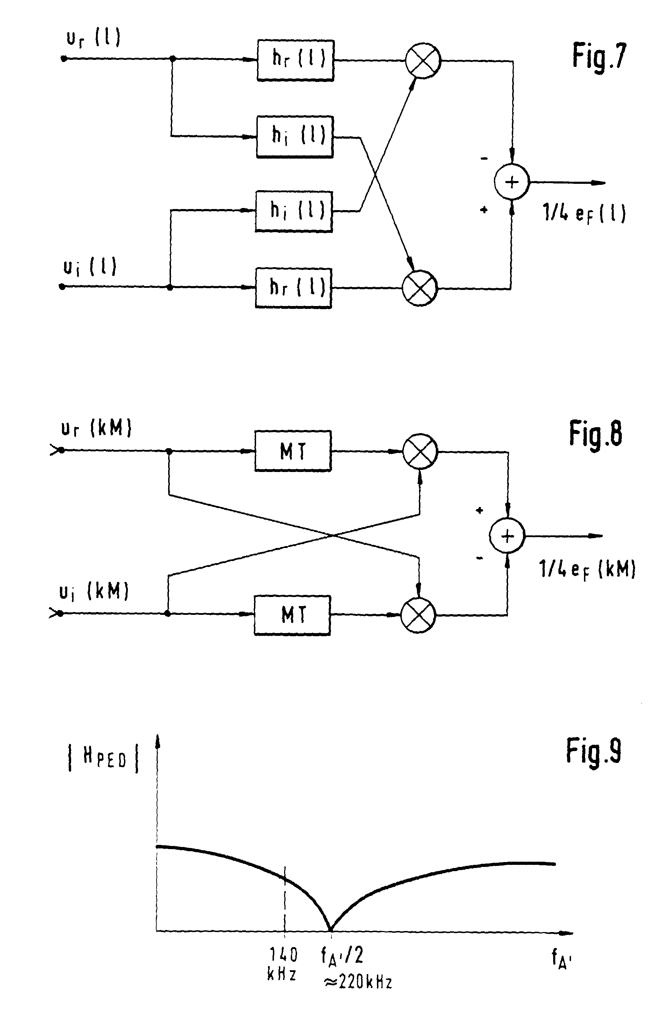

Damit folgt für beliebige Übertragungsfunktionen H(z) des Prototypfilters die in Figur 7 dargestellte vereinfachte Form des Frequenzfehlerdetektors FED.

Mit $H(z) = 1 + z^{-1}$ ergibt sich wegen I = 0,1:

$$\underline{h}_P(l) = h(l) \cdot j^{l+1} \Leftrightarrow \underline{H}_+(z) = j \cdot z^{-1}$$

$$\underline{h}_n(l) = h(l) \cdot (-j)^{l+1} \Leftrightarrow \underline{H}(z) = -j \cdot z^{-1}.$$

Figur 8 zeigt einen Quadricorrelator als Frequenzfehlerdetektor FED für den gilt:

$$h_r \triangleq -z^{-1} = \text{Verzögerung } MT = T_A' = 1/f_A'$$

$$h_i \triangleq 1.$$

Das Ausgangssignal des Frequenzfehlerdetektors FED wird mit dem Schleifenverstärkungsfaktor $k_F/m$ verstärkt auf den Frequenzintegrator FI gegeben. Dieser wird zu Beginn auf $f_{BT}^{nom} = 3,5145$ MHz initialisiert. Aus dem Baustein FI können, wie Figur 2 gestrichelt zeigt, die Abmischfrequenzen für einen Tondemodulator entnommen bzw. daraus abgeleitet werden. Auch kann die Bezugsfrequenz (TT-AFC) für eine Frequenz- und/oder Phasenregelschleife eines Tondemodulators auf diese Weise gewonnen werden.

Der Phasenintegrator PI wird bei $f_A$ betrieben. Daher wird der Wert des Schleifenfilters (Frequenzintegrator) zum Zeitpunkt kMT sukzessive M mal in den Phasenintegrator eingespeist, was einer Interpolation mit der Übertragungsfunktion gemäß $H_{TP}(e^{j\Omega})$ ohne den Faktor 1/M entspricht. Die in der Schleife erforderliche Vorzeichenumkehr ist im Block $e^{-j\phi(k)}$ (Sinus/Cosinus-Tabelle) vorgesehen.

Die PLL-Regelschleife ist konventionell aufgebaut, wobei vor dem Schleifenfilter, wie beschrieben, dezimiert und danach wieder interpoliert wird. Das Schleifenfilter ist vom Grad 1 und enthält Proportionalanteil (kp/N) und Integralanteil $(k_I/N)$. Wegen $f_A' = f_A/32 > \approx 100 B_L$, kann die PLL näherungsweise wie ein System zweiter Ordnung behandelt werden.

Durch die Tiefpaßfilter TP in der Regelschleife entsteht aus dem AZSB-Signal $\underline{s}(k)$ näherungsweise das ZSB-Signal: $\underline{u}(kM) \approx a_0[1 + m \cdot \bar{v}(kM)] \cdot e^{j(2\pi kMf_0T+\varphi_0)}$. Hieraus ist zusammen mit den zuvor aufgezeigten Beziehungen für das AZSB-Signal ersichtlich, daß sowohl die Frequenz $f_0$, als auch die Phase $\varphi_0$ auf Null zu regeln ist, $\bar{v}(k)$:bandbegrenztes Nutzsignal (Realteil).

Die einfachste Möglichkeit, $\varphi_0$ zu Null zu regeln, ist mit der Beziehung für $\underline{u}(kM)$ mit dem PED (Phase Error Detector)-Signal

$$e_p(kM) = u_i(kM)$$

gegeben. Alternativ kann auch folgende Funktion entsprechend dem Prototyp des Quadricorrelators verwendet werden:

$$e_p(kM) = u_i[kMT] + u_i[(k-1)MT].$$

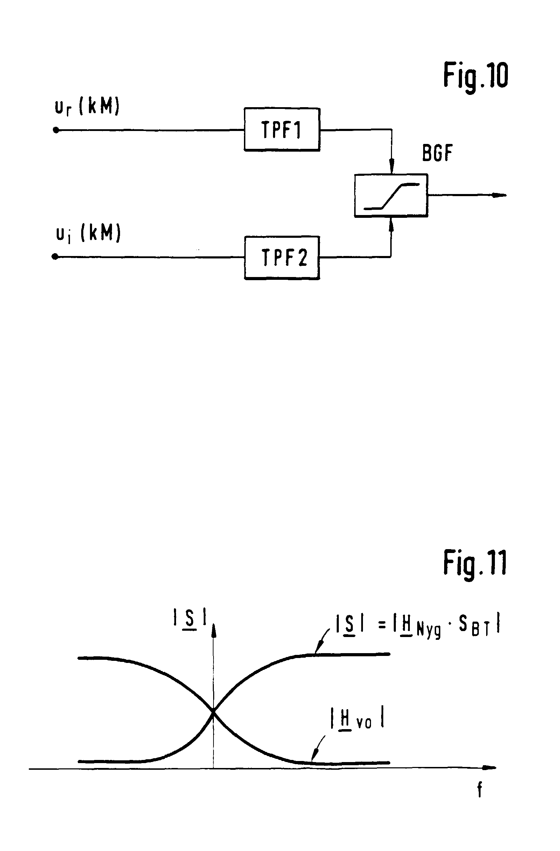

Falls der Phasenfehlerdetektor PED und der Frequenzfehlerdetektor FED gleichzeitig arbeiten, hat vorgenannte Beziehung für $e_{p(kM)}$ den Vorteil, daß FED und PED die gleiche Verzögerung aufweisen. Aufgrund dieser letztgenannten Beziehung nimmt die Regelsteilheit der PLL mit zunehmender Frequenzablage ab (Figur 9).

Für den Frequenzeinrastindikator F-Lock gelten folgende Beziehungen:

Die Lock-in-Bedingung ist erfüllt für $u_i(kM)$ stets $< u_r(kM)$. Gemäß der Beziehung für $\underline{u}(kM)$ gilt in diesem Fall:

$$\underline{u}(kM) = a_0[1 + m \cdot v(kM)] + j \cdot 0 \in R \text{ ist reellwertig bzw.}$$

$$u_r(kM) > 0 \text{ für } m<1.$$

m gibt hier den Modulationsgrad an.

Figur 10 gibt ein Blockschaltbild für den Frequenzeinrastindikator F-Lock an. Er besteht aus zwei Tiefpässen TPF1 und TPF2, die beide auf den Begrenzer BGF geführt sind. Der Begrenzer BGF prüft, ob $|u_i| < |u_r|$ ist (Lock-in). Vorzugsweise ist der Frequenzeinrastindikator F-Lock mit einer Hysteresefunktion ausgestattet, die das Einrasten nur dann anzeigt, wenn die Einrastbedingung über eine vorgebbare Zeit, d.h. über eine Anzahl von Abtastwerten ununterbrochen erfüllt ist und ansonsten, insbesondere bei einmaliger Verletzung der Einrastbedingung, zu einem beliebigen Zeitpunkt den Verlust des Einrastens signalisiert.

Für die Verarbeitung eines RSB-Signals $\underline{s}_{BT}(k)$ ist in der AFC-Schleife das Vorfilter VO (in Figur 1 gestrichelt) vorgesehen. Das Vorfilter VO muß aus dem zu $f_{BT}$ punktsymmetrischen ein hierzu achsensymmetrisches Spektrum erzeugen, damit der Frequenzfehlerdetektor FED ein korrektes Regelsignal abgeben kann.

Weist das Vorfilter VO eine zur Nyquistflanke des Spektrums von $\underline{s}(k)$ gegensinnige Nyquistflanke (gleicher Breite) auf, so ist das Spektrum nach der Vorfilterung wiederum achsensymmetrisch zu $f_{BT}$, falls die Frequenz korrekt geregelt ist. Die Übertragungsfunktion des Vorfilters $|\underline{H}_{VO}|$ und das zu verarbeitende Signalspektrum $|\underline{S}|$ sind in Figur 11 dargestellt. Sind die beiden Flanken nicht exakt punktsymmetrisch zum Nyquistpunkt ($f = 0$, $|H| = 1/2$), so ist $e_F(kM)$ (Figur 4) für $f_{BT} = 0$ nur näherungsweise 0, d.h. bei der AFC entsteht ein Frequenzoffset. Ist dieser klein genug, so zieht die PLL schnell genug in Phase-Lock. Hier ist wiederum die AFC bei Lock-in abzuschalten.

Eine einfache Realisierung für das Vorfilter VO (Länge N = 3) läßt sich von dem Prototypfilter $H_{prot} = 1/4$ $(z^{-1}+1)^2 = 1/4 + 1/2 z^{-1} + 1/4 z^{-2}$ ableiten durch Frequenzverschiebung um $-f_A'/4$.

Für die N = 3 Koeffizienten gilt:

$$\underline{h}(k) = (-j)^{k-1} h(k) \quad k = 0,1,2$$

$$\Rightarrow \underline{h}(0) = jh(0) = j/4$$

$$\underline{h}(1) = h(1) = 1/2$$

$$\underline{h}(2) = -jh(2) = -j/4$$

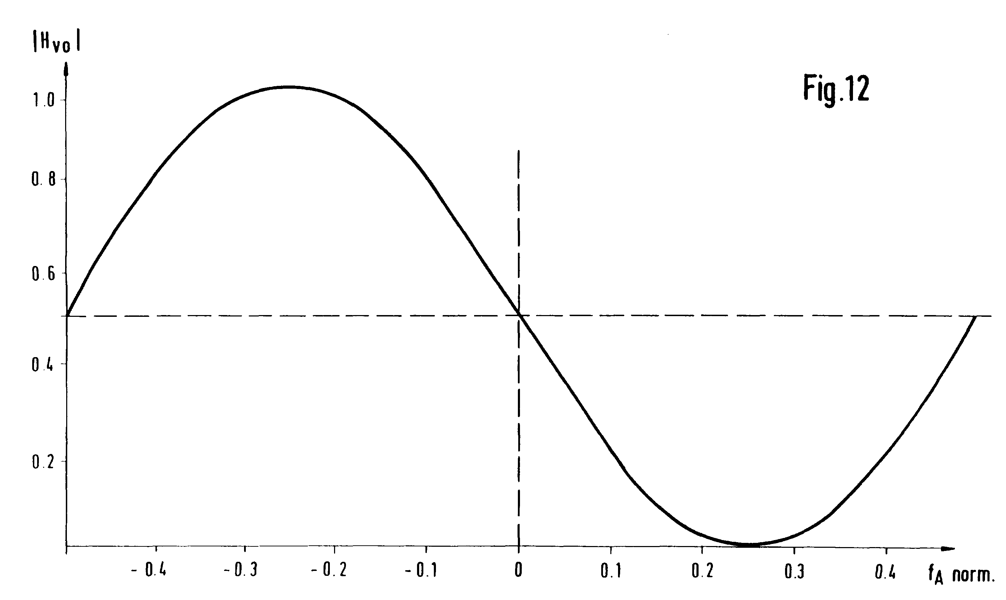

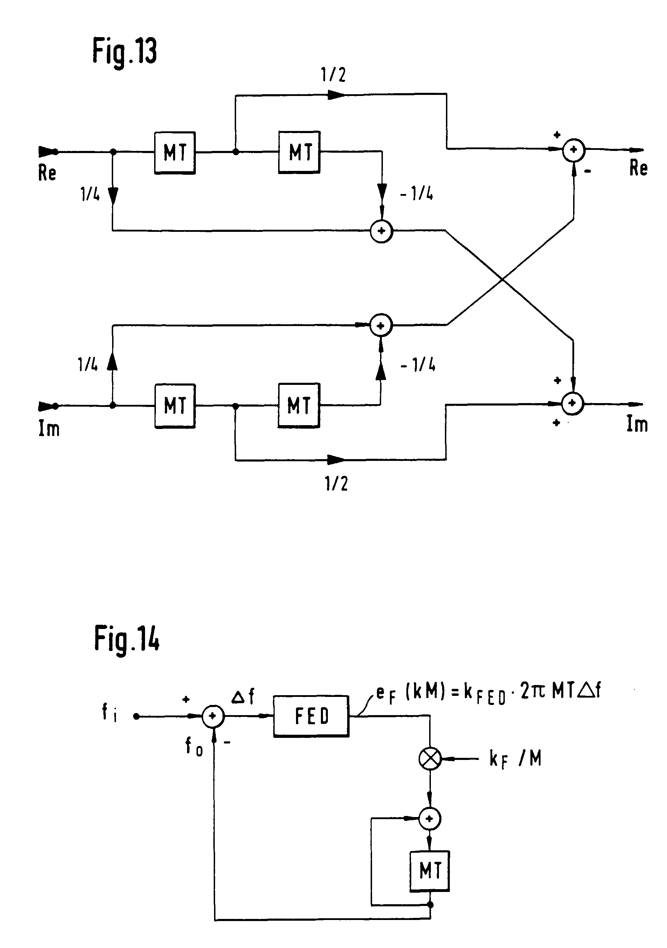

Den normierten Frequenzgang hierzu zeigt Figur 12. Die Nyquistflanke erstreckt sich von $-f_A'/4$ bis $f_A'/4$. Die Struktur des Vorfilters VO ist in Figur 13 dargestellt. Da der Nyquistflankenbereich schmaler ist (mit $f_A' = M = 32$) als der gewünschte Nachziehbereich, ist in diesem Fall M<32 zu wählen. Insbesondere sollte näherungsweise gelten.

$$f_A'/2 = f_A/2M \approx \Delta B_{Nyq}.$$

Das heißt, die Breite der Nyquistflanke des Vorfilters sollte so breit sein, wie der Flankenbereich des sendeseitigen RSB-Nyquistfilters.

Figur 14 zeigt das vereinfachte Modell der AFC im Zeitbereich (Vernachlässigung der Filterverzögerungen und des Vorfilters).

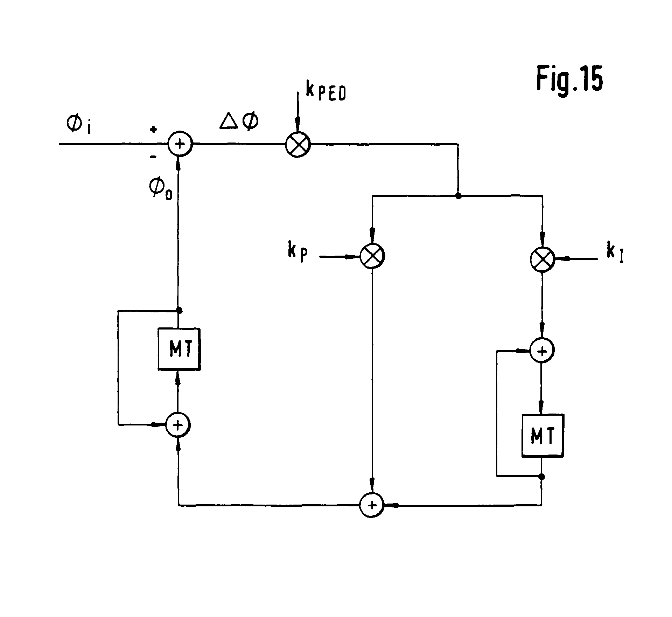

Das vereinfachte Modell der PLL (Vernachlässigung der zusätzlichen Schleifenverzögerung durch TP) ist in Figur 15 dargestellt.

Für den Frequenz- und Phasenregelkreis nach der Erfindung wird von folgenden Erkenntnissen ausgegangen:

Das Schleifenfilter - Tiefpaßfilter TP - für die AFC/PLL muß eine ausreichend hohe Sperrdämpfung $a_S$ aufweisen. Die Sperrbereichsgrenze muß spätestens da beginnen, wo der Unsymmetrieanteil beginnt: $f_{BT} \pm 400...700$ kHz($f_{BT} = 0$). Da wegen der reellen Koeffizienten von TP der Frequenzgang bezüglich $f_{BT} = 0$ exakt symmetrisch ist, sind an den Verlauf des Durchlaßbereichs keine Forderungen zu stellen. Um den Aufwand der AFC-PLL-Regelschleife zu vermindern, wird die Abtastfrequenz im Tiefpaß TP vermindert. Der Dezimationsfaktor kann nach rein praktischen Gesichtspunkten gewählt werden, da unsymmetrische Spektralanteile durch die Dezimation nicht beeinflußt werden. Die Durchlaßbandbreite ist allerdings vom Dezimationsfaktor abhängig. Die Durchlaßbandbreite des dezimierenden Tiefpasses TP muß für die AFC ausreichend groß gewählt werden, damit der Nachziehbereich der AFC gewährleistet ist. Für die PLL kann der Durchlaßbereich wesentlich schmäler angesetzt werden, da die PLL nur bei sehr kleinen Frequenzablagen greifen muß.

Durch die kleinere Durchlaßbandbreite des PLL-Tiefpasses kann besser gemittelt werden, dadurch die Symmetrie verbessert und der PLL-Jitter, der durch Zeilenfrequenz und Modulation erzeugt wird, vermindert werden. Durch die Tiefpaßfilter soll die spektrale Unsymmetrie des ankommenden TV-Signals auf ein tolerierbares Maß vermindert werden. Dies geschieht dadurch, daß aus dem AZSB-Signal näherungsweise wieder ein ZSB-Signal in der Umgebung des Bildträger erzwungen wird. Könnte diese Tiefpaßfilterung ideal durchgeführt werden, so verbliebe dennoch ein Rest Unsymmetrie in dem ZSB-Signal, bedingt durch die vorausgehende Signalverarbeitung und ggf. den Übertragungskanal. Das TV-Signal gelangt bis zum Phasenstellglied/PLL über meist mehrere Filter, die in der Umgebung von $f_{BT}$ keine streng symmetrische Übertragungsfunktion aufweisen. Den Einfluß dieser Unsymmetrien kann man durch Verminderung der Durchlaßbandbreite des dezimierenden Tiefpasses TP für den PLL-Teil verkleinern. An das AFC/PLL-Tiefpaßfilter sind folgende Forderungen zu stellen:

- hohe Sperrdämpfung zur Symmetrierung des AZSB-Signals,
- Sperrbereichsgrenze $f_S = f_A/M = f_A'$
- Dezimationsfaktor M = 32 (64).

Keine Forderungen an den Frequenzgang im Durchlaßbereich:

- langsamer Abfall bis $f_S$(AFC)
- steiler Abfall, erhöhte Mittelungsdauer sehr schmalbandig, um Unsymmetrien, bedingt durch vorangehende Filterrippel zu vermindern (PLL).

Aufgrund dieser Forderungen könnte man für AFC und PLL getrennte Tiefpässe vorsehen. Um Aufwand zu sparen, wird aber das AFC-Tiefpaßfilter TP1 als Vorfilter für das PLL-Tiefpaßfilter TP2 benutzt (Figur 2).
Für die Struktur des PLL-Tiefpasses sei zunächst der PLL-Tiefpaß komplett als ein Filter betrachtet - unabhängig vom Teilfilter TP1 und noch nicht in TP1/2 aufgeteilt.
Bei einem Weißbild (etwa worst case) liegen die Spektrallinien im Abstand der Zeilenfrequenz $f_Z$ = 15,625 kHz. Um diesen Fall optimal zu bedienen, wäre eine Mittelung über N = 905 ungefähr $f_A/f_Z$ = 904,84 sinnvoll. Der nächstgrößere Wert, der nachfolgend als Basiswert verwendet wird, ist

$$N = 1024 = 2^5 \cdot 2^5$$

was wiederum zu günstigen Realisierungen führt. Der erste Dämpfungspol liegt dann bei $f_A/N = f_\infty$ = 13,80681 kHz und die weiteren Pole bei ganzzahligen Vielfachen hiervon. Die Mittelung über N = 1024 Werte, ohne Abtastratenverminderung bedeutet:

$$h_i = \frac{1}{1024} = \frac{1}{N} \text{ wobei } i = 1,....N.$$

Weiter sei vorausgesetzt, daß N = P · Q; N, P, Q Elemente aus der Menge der natürlichen Zahlen $\mathbb{N}$, in mindestens zwei ganze Zahlen faktorisierbar ist. Die Übertragungsfunktion hat die Formel

$$H(z) = \frac{1}{N} \sum_{\nu=1}^{N} z^{-\nu}$$

was sich mit N = P · Q aufspalten läßt in

$$H(z) = \frac{1}{N}\left(\sum_{q=1}^{Q} z^{-q}\right) \cdot \left(\sum_{p=0}^{P-1} z^{-pQ}\right)$$

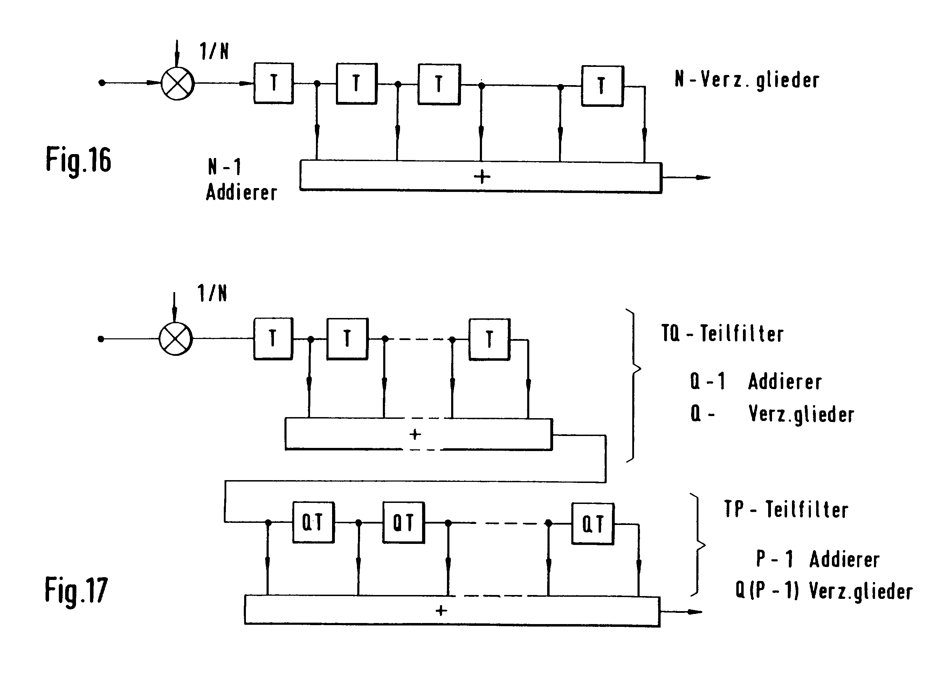

Die Realisierung gemäß H(z) in der nichtfaktorisierten Form erfordert N-1 Addierer in einem Transversalfilterblock (Figur 16). In der faktorisierten Form sind (Q-1) +(P-1) = P+Q-2<<N Addierer erforderlich (Figur 17). Also zwei Transversalfilterblöcke TQ und TP. Die Skalierung mit $\frac{1}{N}$ kann auf die beiden Teilfilter TQ und TP gemäß Figur 17 als $\frac{1}{Q}$ vor dem ersten Teilfilter und als $\frac{1}{P}$ vor dem
zweiten Teilfilter realisiert werden. Damit wird eine optimale Skalierung für die beiden Teilfilter TQ und TP erreicht.

Weitere Aufwandsverminderungen lassen sich erzielen (zusätztliche Einsparungen von Addierern), wenn P und/oder Q noch weiter faktorisierbar sind:

$$Q = \Pi Q_i \quad \text{wobei gilt } Q_i \in \mathbb{N}$$

$$P = \Pi P_i \quad \text{wobei gilt } P_i \in \mathbb{N}.$$

Im Extremfall sind alle Teilfaktoren Primzahlen.

Mit der aufwandsgünstigen Struktur gemäß Figur 17 lassen sich auch sehr aufwandsgünstig Mittelungsfilter realisieren, die den errechneten Mittelwert mit verminderter Abtastfrequenz abgeben, wobei der Dezimationsfaktor M ≠ N der Mittelungsfaktor ist. Soll das Mittelungsfilter dezimieren, so wählt man:

$$M = Q.$$

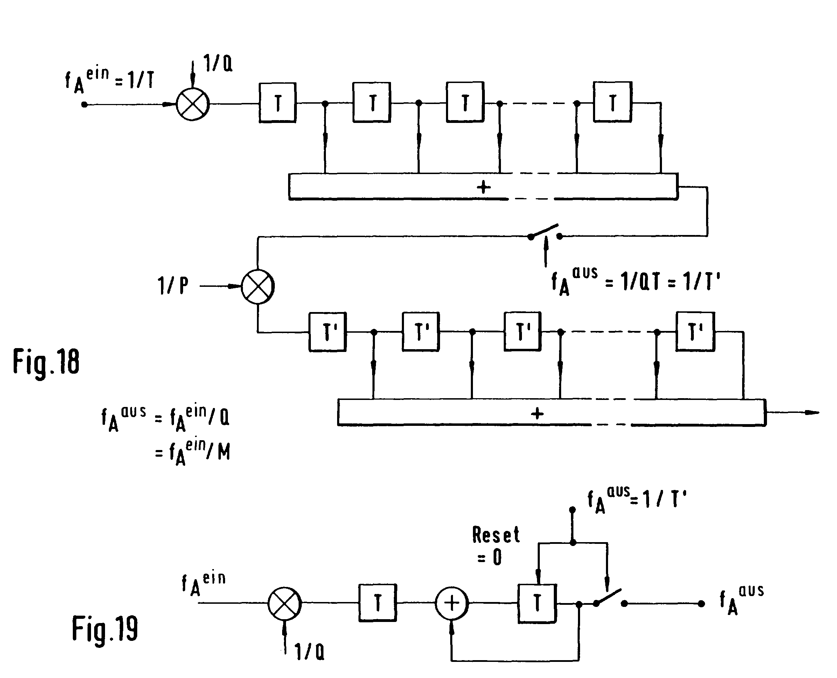

In diesem Fall (Figur 18) nimmt das TQ-Filter die Abtastwerte im Abstand T auf und gibt alle QT-Takte einen Summenwert an das TP-Filter weiter. Das heißt, das P-Filter arbeitet vollständig bei der Ausgangsabtastfrequenz $f_A^{AUS}$ = 1/(QT) = 1/T'. Deshalb sind alle Verzögerungsglieder QT durch ein Verzögerungselement realisierbar (Figur 18). Alternativ zu Figur 18 kann das TQ-Filter zur Dezimation aufwandsgünstig in rekursiver Struktur realisiert werden. Dieses um M = Q dezimierende TQ-Mittlungsfilter (Mittelung über Q-Werte) ist in Figur 19 dargestellt mit nur einem Verzögerungselement T in der Rückkoppelschleife.

Die Anwendung der beschriebenen Erkenntnisse auf die PLL gemäß Figur 2 zeigt, daß die Aufspaltung gemäß Figur 17 bzw. Figur 18 genau der Kaskade der Teilfilter TP1 und TP2 entspricht, wenn TP1 ein Q = 32 Mittelungsfilter mit M = Q = 32 ist. Das Teilfilter TP2 weist dann ebenso P = 32 Koeffizienten auf, wenn die Gesamtmittelungsdauer des PLL-Filters N = P · Q = 1024 ist. Möchte man die PLL-Mittelungsdauer vergrößern, insbesondere zur Verminderung des Jitters, so kann einfach P erhöht werden. Zur weiteren Aufwandsverminderung ließe sich P = 32 noch weiter faktorisieren. Mindestens einer der Dezimationsfaktoren sollte vorzugsweise eine Zweierpotenz sein.

In einer weiteren Ausgestaltung der Erfindung ist dem Teilfilter TP2 ein Begrenzer BG nachgeschaltet (gestrichelt in Figur 2), dessen Schwelle insbesondere mit dem Abschalten der AFC-Regelschleife auf kleinere Werte gesetzt werden kann. Durch die kleine Bandbreite (große Mittelungsdauer) beim Zusammenwirken der Teilfilter TP1 und TP2 werden Signalsprünge in der PLL-Schleife bereits stark eingeebnet, weshalb die Wirksamkeit des Begrenzers eingeschränkt ist. Die Hauptaufgabe des Begrenzers ist es, Sprünge des Signals in der Schleife, die vom Bildinhalt herrühren, z.B. unzureichende Schleifenfilterung, abzukappen, um dadurch den modulationsabhängigen Phasenjitter zu vermindern. Der Begrenzer kann bei geeigneter Festlegung der Kappungsschwelle auch bewirken, daß die PLL nur während der Synchronisation arbeitet; d.h. bei fehlender Modulation, und während des Bildinhalts außer Betrieb ist.

**Patentansprüche**

1. Frequenz- und Phasenregelkreis, für ein digitales komplexwertiges Restseitenbandsignal oder ein nyquistflankengefiltertes Signal, beispielsweise ein digitalisiertes TV-Signal, mit einer AFC/PLL - Regelschleife zur digitalen Frequenz- und Phasenregelung mit folgenden Bestandteilen:

   - einer digitalen Tiefpaßfiltereinrichtung (TP) am Eingang der AFC/PLL-Regelschleife, deren Filterkoeffizienten so gewählt sind, daß aus dem zu regelnden Signal ein bandbegrenztes zu einer Bezugsfrequenz symmetrisches Zweiseitenbandsignal entsteht, wobei diese Tiefpaßfiltereinrichtung (TP) aus zwei Teilfiltern (TP1, TP2) besteht mit einem ersten Teilfilter (TP1) sowohl für die AFC- als auch die PLL-Regelschleife und einem nachgeordneten zweiten Teilfilter (TP2) nur im Signalpfad der PLL-Regelschleife und wobei die Tiefpaßfiltereinrichtung (TP) aus Verzögerungsgliedern besteht zur Summation von aufeinanderfolgenden Abtastwerten des zu regelnden Signals und entsprechender Skalierung.

2. Regelkreis nach Anspruch 1, dadurch gekennzeichnet, daß im Falle eines zu regelnden Restseitenbandsignals (RSB) in der Regelschleife ein Vorfilter (VO) vorgesehen ist,das einen zur Nyquistflanke des Restseitenbandsignals inversen Frequenzgang aufweist.

**3.** Regelkreis nach Anspruch 1 oder 2, dadurch gekennzeichnet, daß die digitale Tiefpaßfiltereinrichtung (TP) dezimierend ausgebildet ist.

**4.** Regelkreis nach Anspruch 3, dadurch gekennzeichnet, daß der Dezimationsfaktor der Filtereinrichtung (TP; TP1, TP2) so gewählt ist, daß der Quotient aus Abtastfrequenz bei der Digitalisierung zur Anzahl der Abtastwerte M bei Verwendung eines Transversalfilters größer ist als der Nachziehbereich der Phasenregelschleife.

**5.** Regelkreis nach einem der Ansprüche 1 bis 4, gekennnzeichnet durch einen Frequenzeinrastindikator (F-Lock), der nach Einrasten der Frequenz die Frequenzregelschleife auftrennt.

**6.** Regelkreis nach einem der Ansprüche 1 bis 5, dadurch gekennzeichnet, daß die Frequenzregelschleife (FED) zwei Bandpaßfilter (BP1, BP2) mit komplexen Koeffizienten umfasst, die beide vom gleichen Prototypfilter durch Frequenzverschiebung abgeleitet sind, sowie eine Subtraktionsstufe (SUB1) zur Ermittlung der Differenz der Ausgangsleistungen beider Bandpaßfilter.

**7.** Regelkreis nach einem der Ansprüche 1 bis 6, dadurch gekennzeichnet, daß in der Frequenzregelschleife (FED) ein Quadricorrelator vorgesehen ist.

**8.** Regelkreis nach einem der Ansprüche 1 bis 7, dadurch gekennzeichnet, daß die beiden Teilfilter (TP1, TP2) als Transversalfilterblöcke (TQ,TP) ausgebildet sind mit einer Skalierung vor dem ersten Filterblock(TQ) oder mit einer Skalierung jeweils vor einem Transversalfilterblock.

**9.** Regelkreis nach einem der Ansprüche 1 bis 7, dadurch gekennzeichnet, daß eines der beiden Teilfilter (TQ), insbesondere dasjenige, welches die Dezimation ausführt, als rekursives Filter mit nur einem Verzögerungselement in der Rückkoppelschleife ausgebildet ist.

**10.** Regelkreis nach einem der Ansprüche 1 bis 9, dadurch gekennzeichnet, daß dem zweiten Teilfilter (TP2) ein Begrenzer (BG) nachgeschaltet ist, dessen Begrenzerschwelle insbesondere so gewählt ist,daß die PLL- Regelschleife nur dann arbeitet, wenn kein moduliertes Signal anliegt.

**11.** Regelkreis nach einem der Ansprüche 1 bis 10, dadurch gekennzeichnet, daß dem Frequenzintegrator (FI) der Regelschleife die Abmischfrequenzen für einen Tondemodulator entnommen bzw. daraus abgeleitet sind, oder als Bezugsfrequenz für dessen Frequenz- und/oder Phasenregelschleife (TT-AFC) dienen.

**12.** Regelkreis nach einem der Ansprüche 5 bis 11, dadurch gekennzeichnet, daß der Frequenzeinrastindikator (F-Lock) mit einer Hysteresefunktion ausgestattet ist, die das Einrasten nur dann anzeigt, wenn die Einrastbedingung über eine vorgebbare Zeit mit einer Anzahl von Abtastwerten ununterbrochen erfüllt ist und ansonsten, insbesondere bei einmaliger Verletzung der Einrastbedingung zu einem beliebigen Zeitpunkt, den Verlust des Einrastens signalisiert.

**13.** Regelkreis nach einem der Ansprüche 3 bis 12, dadurch gekennzeichnet, daß mindestens einer der Dezimationsfaktoren der Filtereinrichtung (TP)/Teilfilter (TP1/TP2) eine Zweierpotenz ist.

**Claims**

**1.** Frequency and phase control circuit, for a digital complex-value vestigial sideband signal or a Nyquist slope-filtered signal, for example a digitized TV signal, with an AFC/PLL control loop for digital frequency and phase control, having the following component parts:

- a digital low-pass filter device (TP) at the input of the AFC/PLL control loop, whose filter coefficients are chosen in such a way that a band-limited double sideband signal which is symmetrical with respect to a reference frequency is produced from the signal to be controlled, this low-pass filter device (TP) comprising two subfilters (TP1, TP2) with a first subfilter (TP1) for both the AFC and the PLL control loop and a downstream second subfilter (TP2) only in the signal path of the PLL control loop, and the low-pass filter device (TP) comprising delay elements for the summation of successive samples of the signal to be controlled and corresponding scaling.

2. Control circuit according to Claim 1, characterized in that, in the case of a vestigial sideband signal (RSB) to be controlled, a prefilter (VO) is provided in the control loop, which prefilter has an inverse frequency response with respect to the Nyquist loop of the vestigial sideband signal.

3. Control circuit according to claim 1 or 2, characterized in that the digital low-pass filter device (TP) is of decimating design.

4. Control circuit according to Claim 3, characterized in that the decimation factor of the filter device (TP; TP1, TP2) is chosen in such a way that the quotient of sampling frequency during digitization to the number of samples N during use of a transversal filter is greater than the pulling range of the phase control loop.

5. Control circuit according to one of Claims 1 to 4, characterized by a frequency lock-in indicator (F-Lock), which interrupts the frequency control loop after the lock-in of the frequency.

6. Control circuit according to one of Claims 1 to 5, characterized in that the frequency control loop (FED) comprises two bandpass filters (BP1, BP2) with complex coefficients which are both derived from the same prototype filter by frequency shifting, and also a subtraction stage (SUB1) for determining the difference between the output powers of the two bandpass filters.

7. Control circuit according to one of Claims 1 to 6, characterized in that a quadricorrelator is provided in the frequency control loop (FED).

8. Control circuit according to one of Claims 1 to 7, characterized in that the two subfilters (TP1, TP2) are designed as transversal filter blocks (TQ, TP) with scaling upstream of the first filter block (TQ) or with scaling in each case upstream of a transversal filter block.

9. Control circuit according to one of Claims 1 to 7, characterized in that one of the two subfilters (TQ), in particular the one which performs decimation, is designed as a recursive filter with just one delay element in the feedback loop.

10. Control circuit according to one of Claims 1 to 9, characterized in that a limiter (BG) is connected downstream of the second subfilter (TP2), the limiter threshold of which limiter is chosen in particular in such a way that the PLL control loop operates only when no modulated signal is present.

11. Control circuit according to one of Claims 1 to 10, characterized in that the downwards-mixing frequencies for a sound demodulator are drawn from the frequency integrator (FR) of the control loop, or are derived therefrom, or serve as reference frequency for the frequency and/or phase control loop (TT-AFC) of the said sound demodulator.

12. Control circuit according to one of Claims 5 to 11, characterized in that the frequency lock-in indicator (F-Lock) is equipped with a hysteresis function which indicates lock-in only when the lock-in condition is fulfilled in an uninterrupted manner over a predeterminable period of time with a number of samples and otherwise, in particular in the event of a single violation of the lock-in condition at any desired instant, signals the loss of lock-in.

13. Control circuit according to one of Claims 3 to 12, characterized in that at least one of the decimation factors of the filter device (TP)/subfilters (TP1/TP2) is a power of two.

**Revendications**

1. Circuit de régulation de fréquence et de phase pour un signal numérique complexe à bandes latérales atténuées ou un signal à filtrage de flans de Nyquist, par exemple un signal de télévision numérisé, avec une boucle de régulation AFC/PLL pour la régulation numérique de la fréquence et de la phase, comprenant les éléments suivants :

- une installation de filtres passe-bas numériques (TP) à l'entrée de la boucle de régulation AFC/PLL, dont les coefficients de filtre sont choisis pour obtenir, à partir du signal à réguler, un signal à deux bandes latérales symétriques par rapport à une fréquence de référence, ce signal étant limité en bande,

  cette installation de filtres passe-bas (TP) se composant de deux filtres partiels (TP1, TP2), avec un premier filtre partiel (TP1) pour la boucle de régulation AFC et la boucle de régulation PLL, et un second filtre partiel (TP2) en aval, uniquement dans le chemin du signal de la boucle de régulation PLL, et

l'installation de filtres passe-bas (TP) se compose d'éléments de retard pour sommer les valeurs de détection successives du signal à réguler et pour effectuer une mise à l'échelle correspondante.

2. Circuit de régulation selon la revendication 1,
caractérisé en ce que
dans le cas d'un signal à bandes latérales atténuées (BLA), à réguler, il est prévu, dans la boucle de régulation, un pré-filtre (VO) qui présente une réponse en fréquence inverse des flans de Nyquist du signal à bandes latérales atténuées.

3. Circuit de régulation selon la revendication 1 ou 2,
caractérisé en ce que
l'installation de filtres passe-bas numériques (TP) est à décimation.

4. Circuit de régulation selon la revendication 3,
caractérisé en ce que
le coefficient de décimation de l'installation de filtres (TP ; TP1, TP2) est choisi pour que le rapport entre la fréquence de détection à la numérisation, et le nombre de valeurs de détection M lorsqu'on utilise un filtre transversa, soit supérieur à la plage de rémanence de la boucle de régulation de phase.

5. Circuit de régulation selon l'une des revendications 1 à 4,
caractérisé par
un indicateur d'accrochage de fréquence (verrouillage F) qui, après accrochage de la fréquence, ouvre la boucle de régulation de fréquence.

6. Circuit de régulation selon l'une des revendications 1 à 5,
caractérisé en ce que
la boucle de régulation de fréquence (FED) comprend deux filtres à bande passante (BP1, BP2) avec des coefficients complexes, ces deux filtres étant déduits du même filtre prototype par décalage de fréquence, ainsi qu'un soustracteur (SUBI) pour former la différence des puissances de sortie des deux filtres à bande passante.

7. Circuit de régulation selon l'une des revendications 1 à 6,
caractérisé par
un quadricorrélateur dans la boucle de régulation de fréquence (FED).

8. Circuit de régulation selon l'une des revendications 1 à 7,
caractérisé en ce que
les deux filtres partiels (TP1, TP2) sont en forme de blocs de filtre transversal (TQ, TP) avec une mise à l'échelle en amont du premier bloc de filtre (TQ) ou une mise à l'échelle chaque fois en amont d'un bloc de filtre transversal.

9. Circuit de régulation selon l'une des revendications 1 à 7,
caractérisé en ce que
l'un des deux filtres partiels (TQ), notamment celui qui exécute la décimation, est un filtre récurrent avec seulement un élément de temporisation dans la boucle de réaction.

10. Circuit de régulation selon l'une des revendications 1 à 9,
caractérisé par
un limiteur (BG) en aval du second filtre partiel (TP2), dont le seuil de limitation est notamment choisi pour que la boucle de régulation PLL ne travaille qu'en l'absence de signal modulé.

11. Circuit de régulation selon l'une des revendications 1 à 10,
caractérisé en ce qu'
on prend la fréquence de mélange de l'intégrateur de fréquence (FI) de la boucle de régulation, pour un démodulateur son, ou on déduit cette fréquence ou on l'utilise comme fréquence de référence pour la boucle de régulation de fréquence et/ou de phase (TT-AFC).

12. Circuit de régulation selon l'une des revendications 5 à 11,

caractérisé en ce que
l'indicateur d'accrochage de fréquence (verrouillage F) a une fonction d'hystérésis qui n'indique l'accrochage que si la condition d'accrochage est remplie de manière ininterrompue pendant une durée prédéterminée avec un certain nombre de valeurs de détection et, dans le cas contraire, notamment pour la première atteinte de la condition d'accrochage, à un instant quelconque, elle signale la perte de l'accrochage.

13. Circuit de régulation selon l'une des revendications 3 à 12,
caractérisé en ce qu'
au moins l'un des coefficients de décimation de l'installation de filtres (TP)/filtres partiels (TP1/TP2) correspond à une puissance de deux.

Fig.1

FBAS_TT  AAF
ZF

A/D
$f_A$

RBF

CHBFT
$\downarrow 2$

Ton-Demod.

MI

AFC/PLL

FED, PED, NCO, Integ.

Ton-AFC

CHBFTRSB

$\tau_g$

FBAS-Entzerrer

VV

Fig.2

Fig.3

Fig.4

Fig.5

Fig.6

$u_r(l)$

$h_r(l)$

$h_i(l)$

$h_i(l)$

$u_i(l)$

$h_r(l)$

$1/4\ e_F(l)$

Fig.7

$u_r(kM)$

MT

$u_i(kM)$

MT

$1/4\ e_F(kM)$

Fig.8

$|H_{PED}|$

Fig.9

140 kHz

$f_{A'}/2$ ≈220kHz

$f_{A'}$

# Fig.10

$u_r\,(kM)$

TPF1

BGF

$u_i\,(kM)$

TPF2

# Fig.11

$|\underline{S}|$

$|\underline{S}| = |\underline{H}_{Nyg} \cdot S_{BT}|$

$|\underline{H}_{vo}|$

$f$

Fig.12

$|H_{vo}|$

$f_A$ norm.

EP 0 834 228 B1

# Fig.13

# Fig.14

$$e_F(kM) = k_{FED} \cdot 2\pi \, MT \, \Delta f$$

**Fig.15**

EP 0 834 228 B1

**Fig.16**

1/N

N-Verz.glieder

N-1
Addierer

**Fig.17**

1/N

TQ - Teilfilter

Q-1   Addierer

Q -    Verz.glieder

TP - Teilfilter

P-1  Addierer

Q(P-1) Verz.glieder

EP 0 834 228 B1

$f_A{}^{ein} = 1/T$

$1/Q$

T   T   T   —   T

$+$

$f_A{}^{aus} = 1/QT = 1/T'$

$1/P$

**Fig.18**

$f_A{}^{aus} = f_A{}^{ein}/Q$
$= f_A{}^{ein}/M$

T'   T'   T'   —   T'

$+$

$f_A{}^{aus} = 1/T'$

Reset
$= 0$

$f_A{}^{ein}$

$1/Q$

T   $+$   T

**Fig.19**

$f_A{}^{aus}$